# EUROPÄISCHE PATENTSCHRIFT

(11) **EP 1 616 470 B1**
(45) Veröffentlichungstag und Bekanntmachung des Hinweises auf die Patenterteilung: **17.07.2013**
(21) Anmeldenummer: 05010411.6
(22) Anmeldetag: 13.05.2005
(51) Int. Cl.: A01B 69/00

(54) **Verfahren und Vorrichtung zur Steuerung einer landwirtschaftlichen Arbeitsmaschine**
Method and device for guiding an agricultural working vehicle
Procédé et dispositif de guidage pour machine de travail agricole

(30) Priorität: 28.06.2004 DE 102004031211
(43) Veröffentlichungstag der Anmeldung: 18.01.2006
(73) Patentinhaber: CLAAS Selbstfahrende Erntemaschinen GmbH, 33428 Harsewinkel (DE)
(72) Erfinder: Brunnert, Andreas, 33129 Delbrück (DE)

(56) Entgegenhaltungen:
- EP-A- 1 183 929
- EP-A- 1 406 140
- EP-A- 1 419 683
- WO-A-03/081981
- DE-A1- 19 629 618
- US-B1- 6 205 381
- US-B1- 6 216 071
- US-B1- 6 236 924

## Beschreibung

Die Erfindung betrifft ein Verfahren und eine Vorrichtung zur Steuerung einer landwirtschaftlichen Arbeitsmaschine nach dem Oberbegriff der Ansprüche 1 und 10, siehe z.B. EP 1183929.

Bereits aus der EP 0 660 660 war es bekannt, landwirtschaftliche Arbeitsmaschinen mit sogenannten GPS-Systemen auszurüsten, um die Position der landwirtschaftlichen Erntemaschine auf einer zu bearbeitenden Fläche zu registrieren. Dabei wurde von dem Betreiber der Maschine die abzufahrende Route bestimmt und das mit einer Aufzeichnungseinheit in Wirkverbindung stehende GPS-System lieferte die Positionsdaten des Fahrzeugs, die dann in der Aufzeichnungseinheit zur elektronischen Abbildung des zurückgelegten Fahrtweges herangezogen wurden. Derartige Systeme bildeten einen ersten Schritt in Richtung der Aufzeichnung von Fahrtrouten, wobei es hier zunächst nur um die Aufzeichnung von Fahrtrouten an sich ging. Eine vorherige Planung von abzuarbeitenden Fahrtrouten war mit derartigen Systemen nicht möglich.

Den Gedanken der Aufzeichnung von Fahrtrouten konsequent weiterverfolgend ermöglichen Systeme nach der EP 0 821 296 die Generierung von Fahrtrouten in Abhängigkeit von äußeren Geometrien zu bearbeitender landwirtschaftlicher Nutzflächen. Der wesentliche Vorteil dieser Systeme ist, dass erstmals vorab Fahrtrouten unter Berücksichtigung diverser Optimierungskriterien ermittelbar sind, die dann im einfachsten Fall selbsttätig von der landwirtschaftlichen Arbeitsmaschine abgearbeitet werden. Aufgrund dessen, dass hier auf der Basis einfacher geometrischer Zusammenhänge vorab Fahrstrecken definiert werden, sind solche Systeme nur in der Lage das zu bearbeitende Territorium in Abhängigkeit von der Arbeitsbreite der landwirtschaftlichen Arbeitsmaschine in diese Fahrstrecken zu unterteilen. Da in der Regel die Breite eines zu bearbeitenden Territoriums nicht ein ganzzahliges Vielfaches der Arbeitsbreite der landwirtschaftlichen Arbeitsmaschine bildet werden mit derartigen Routenplanungssystemen stets auch Fahrstrecken abgearbeitet, die nur einen Teil der möglichen Arbeitsbreite der Arbeitsmaschine erfordern. Im ungünstigsten Fall kann die Situation eintreten, dass berechnete randseitige Fahrtrecken nur mit großem Aufwand, nämlich durch geschicktes manövrieren des Betreibers der Arbeitsmaschine, abarbeitbar sind oder im Fall des Ausbringens von Stoffen, wie etwa Dünger oder Pflanzenschutzmittel, auf Teilbereichen des zu bearbeitenden Territoriums mehrfach der jeweilige Stoff ausgebracht wird. Dies erhöht zunächst die Kosten wegen des unnötigerweise zuviel ausgebrachten Stoffes und kann im ungünstigsten Fall wegen der Mehrfachausbringung auch zu Schädigungen der Pflanzen führen.

Es ist deshalb Aufgabe der Erfindung ein Routenplanungssystem vorzuschlagen, welches die beschriebenen Nachteile des Standes der Technik vermeidet und einen wirtschaftlichen Einsatz der landwirtschaftlichen Arbeitsmaschine auf dem zu bearbeitenden Territorium gewährleistet.

Diese Aufgabe wird erfindungsgemäß durch die kennzeichnenden Merkmale der Ansprüche 1 und 10 gelöst.

Indem zumindest ein Parameter der landwirtschaftlichen Arbeitsmaschine in Abhängigkeit von der Gestalt eines bearbeiteten Territoriums und/oder eines Restflächenterritoriums angepasst wird, ist sichergestellt, dass die Arbeitsweise der landwirtschaftlichen Arbeitsmaschine oder ihrer Arbeitsaggregate an die Gestalt des jeweiligen Territoriums unter dem Gesichtspunkt eines wirtschaftlichen Einsatzes der landwirtschaftlichen Arbeitsmaschine angepasst werden kann.

Eine vorteilhafte Weiterbildung der Erfindung ergibt sich dann, wenn die landwirtschaftliche Arbeitsmaschine von einem Trägerfahrzeug mit adaptierten Arbeitsaggregaten gebildet wird und die in Abhängigkeit von der Gestalt des zu bearbeitenden Territoriums einstellbaren Parameter sowohl Parameter des Trägerfahrzeugs als auch der Arbeitsaggregate sein können. Damit wird eine hohe Flexibilität der Wirtschaftlichkeitsoptimierung erreicht, da je nach Art der landwirtschaftlichen Arbeitsmaschine entweder einzelne Arbeitaggregate von einer Betriebs- in eine Außerbetriebsposition verbracht werden können oder einfach nur nicht benötigte Arbeitsaggregate abgeschaltet nicht aber verschwenkt werden.

Der änderbare Parameter umfasst die Ausrichtung der landwirtschaftlichen Arbeitsmaschine oder der adaptierten Arbeitsaggregate nach der Gestalt des bearbeiteten Territoriums und/oder des Restflächenterritoriums. Die Ausrichtung kann dabei einerseits die Schrägstellung der landwirtschaftlichen Arbeitsmaschine und ihrer Arbeitsaggregate oder die Einstellung von Teilarbeitsbreiten betreffen. Dies hat insbesondere die Vorteile, dass einerseits die Arbeitsbreite der landwirtschaftlichen Arbeitsmaschine besser genutzt und andererseits das mehrmalige Bearbeiten ein- und desselben Territoriums vermieden wird.

Auf konstruktiv besonders einfache Weise lässt sich die Einstellung von Teilarbeitsbreiten durch Zu- und Abschaltung einzelner Arbeitsorgane realisieren.

In der Regel wird die landwirtschaftliche Arbeitsmaschine nach ihrem Einsatz auf einem zu bearbeitenden Territorium in ein neues Territorium umgesetzt, wobei das Umsetzen gewöhnlich mit einer höheren Fahrgeschwindigkeit als die Arbeitsfahrten in dem zu bearbeitenden Territorium erfolgt. Gleiches gilt für das Umsetzen von einer abgearbeiteten Fahrtroute zur nächsten abzuarbeitenden Fahrtroute. In vorteilhafter Weiterbildung kann hier die Fahrgeschwindigkeit der landwirtschaftlichen Arbeitsmaschine unmittelbar dann geändert werden, wenn die Größe des Restflächenterritoriums gleich Null ist, die Bearbeitung des Territoriums, welches im einfachsten Fall auch eine einzige Fahrtroute sein kann also abgeschlossen ist.

In einer weiteren vorteilhaften Ausgestaltung der Erfindung kann der in Abhängigkeit von der Gestalt des bearbeiteten Territoriums oder des Restflächenterritoriums änderbare Parameter die Aktivierung vordefinierter Arbeitsabläufe umfassen. Dies hat insbesondere den Vorteil, dass sich stets an bestimmten Stellen im Territorium, wie etwa am Ende einer Fahrtroute, wiederholende Arbeitsabläufe automatisch ausgelöst werden. Insbesondere können diese vordefinierten Arbeitsabläufe ein sogenanntes Vorgewendemanagement sein, wobei die Gestalt des Restflächenterritoriums im einfachsten Fall auch so definiert sein kann, dass sie von der verbleibenden Gestalt einer zu bearbeitenden Fahrtroute gebildet wird.

Häufig hängt die Aktivierung von Arbeitsorganen wie etwa die Ausrichtung von Gutübergabeeinrichtungen maßgeblich von der Gestalt des bearbeiteten Territoriums oder des Restflächenterritoriums in der Weise ab, dass beispielsweise Überladefahrzeuge wegen eingeschränkter Platzverhältnisse nur an bestimmten Stellen im Territorium positionierbar sind. In vorteilhafter Weiterbildung der Erfindung kann der änderbare Parameter nun die rechts- und linksseitige Ausrichtung von Arbeitsorganen umfassen, sodass insbesondere vom Betreiber vorzunehmende Handhabungen zur Durchführung von Übergabeprozessen erheblich reduziert werden können.

Wegen des Bekanntseins der Gestalt des Restfiächenterritoriums liegt der landwirtschaftlichen Arbeitsmaschine auch eine qualitative Information bezüglich des noch erforderlichen Leistungsbedarfs vor, die in vorteilhafter Weiterbildung der Erfindung auch dafür genutzt werden kann, dass die Drehzahl des Motors der landwirtschaftlichen Arbeitsmaschine und/oder die Drehzahl der verschiedensten Antriebe der Arbeitsmaschine oder der adaptierten Arbeitsgeräte auf diesen erforderlichen Leistungsbedarf anpassbar sind.

Eine konstruktive besonders einfache Umsetzung des erfindungsgemäßen Verfahrens ergibt sich dann, wenn dem Routenplanungssystem zumindest eine Rechen- und Steuereinheit zugeordnet ist die in Abhängigkeit von den generierten Fahrtrouten Stellsignale zur Einstellung zumindest eines Parameters der landwirtschaftlichen Arbeitsmaschine generiert und dieser zumindest eine Parameter in Abhängigkeit von der Gestalt eines bearbeiteten Territoriums und/oder eines Restflächenterritoriums ermittelt wird.

Eine weitere Entlastung des Betreibers der landwirtschaftlichen Arbeitsmaschine wird dann erreicht, wenn die Rechen- und Steuereinheit die selbsttätige Einstellung des ermittelten Parameters an der landwirtschaftlichen Arbeitsmaschine bewirkt.

Um dem Betreiber die Möglichkeit zu geben, auf die Einstellung des ermittelten Parameters Einfluss zu nehmen, ist in einer vorteilhaften Weiterbildung der Erfindung vorgesehen, dass der ermittelte Parameter über eine Anzeigeeinheit dem Betreiber angezeigt wird.

Weitere vorteilhafte Ausführungen sind Gegenstand weiterer Unteransprüche und werden nachfolgend an Hand eines in mehreren Figuren dargestellten Ausführungsbeispiels beschrieben. Es zeigen:
- Figur 1: eine schematische Darstellung des erfindungsgemäßen Verfahrens
- Figur 2: eine Flussbilddarstellung des erfindungsgemäßen Verfahrens
- Figur 3: verschiedenen Anwendungsfälle des erfindungsgemäßen Verfahrens

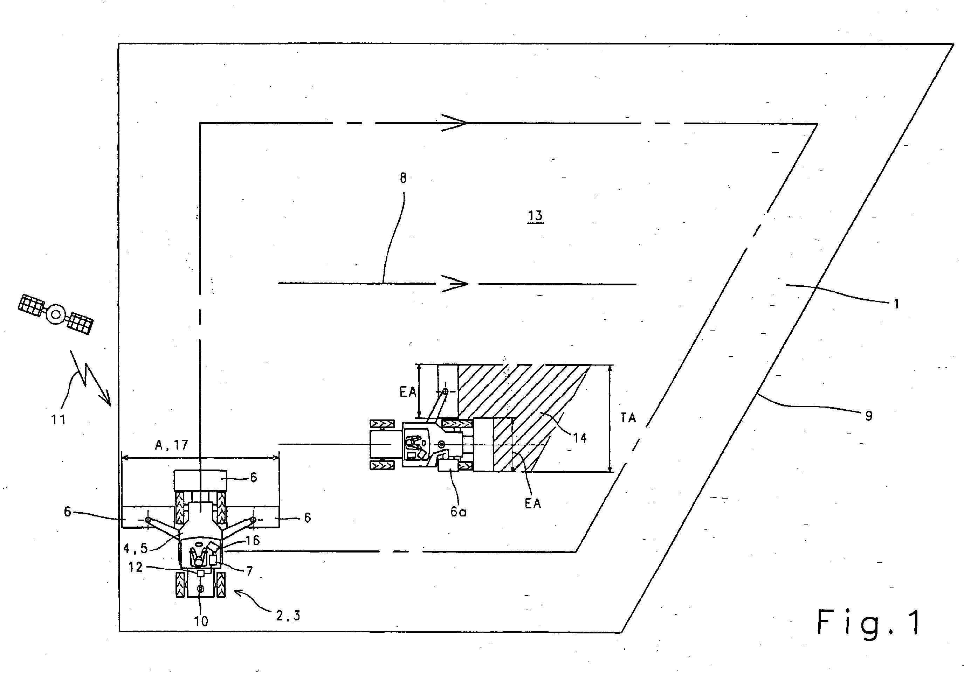

Figur 1 zeigt schematisch ein zu bearbeitendes Territorium 1, welches von einer im dargestellten Ausführungsbeispiel als selbstfahrendes Mähwerk 3 ausgeführten landwirtschaftlichen Arbeitsmaschine 2 überfahren und bearbeitet wird. Das selbstfahrende Mähwerk 3 wird von einem Trägerfahrzeug 4 gebildet, was im einfachsten Fall als Schlepper 5 ausgeführt sein kann, dem frontseitig und seitlich hierzu als Mäheinheiten ausgeführte Arbeitsaggregate 6 zugeordnet sind. Zudem verfügt die landwirtschaftliche Arbeitsmaschine 2 über ein an sich bekanntes Routenplanungssystem 7, welches in der Lage ist, dass zu bearbeitende Territorium 1 in sogenannte, von der landwirtschaftlichen Arbeitsmaschine 2 abzuarbeitende Fahrtrouten 8 zu unterteilen. Die Generierung dieser Fahrtrouten 8 wird in der Regel dadurch erreicht, dass die landwirtschaftliche Arbeitsmaschine 2 zunächst das zu bearbeitende Territorium 1 in einem ersten Arbeitslauf den Außenkonturen 9 folgend umrundet und das Routenpianüngssystem 7 sodann in Abhängigkeit von der Arbeitsbreite A weitere Fahrtrouten 8 ermittelt, sodass schließlich eine vollständige Überdeckung des zu bearbeitenden Territoriums 1 mit von der Arbeitsbreite A abhängenden Fahrtrouten 8 sichergestellt ist. Wegen der besseren Reproduzierbarkeit sind derartige Routenplanungssysteme 7 in der Regel GPSbasiert, wobei der landwirtschaftlichen Arbeitsmaschine 2 ein GPS-Empfänger 10 zugeordnet ist, der die Satelliten-generierten Positionssignale 11 an eine mit dem Routenplanungssystem 7 gekoppelte Verrechnungseinheit 12 übergibt. Das Routenplanungssystem 7 ist weiter so strukturiert, dass es in Abhängigkeit von den durch die landwirtschaftliche Arbeitsmaschine 2 abgearbeiteten Fahrtrouten 8 das zu bearbeitende Territorium 1 in ein bereits bearbeitetes Territorium 13 und ein noch zu bearbeitendes Restflächenterritorium 14 unterteilt. In an sich bekannter Weise können das bearbeitete Territorium 13 und das Restflächenterritorium 14 an einer im Sichtbereich des Betreibers 15 liegenden Anzeigeeinheit 16 visualisiert werden. Es liegt im Rahmen der Erfindung, dass das Restflächenterritorium 14 auch nur auf eine einzige Fahrtroute 8 bezogen ist, sodass sich innerhalb des zu bearbeitenden Territoriums 1 eine Vielzahl von Restflächenterritorien 14 ergeben können.

Gemäß der mittleren Darstellung in Figur 1 kann nun bei der Abarbeitung der generierten Fahrtrouten 8 durch die landwirtschaftliche Arbeitsmaschine 2 der Fall eintreten, dass beispielsweise die letzte abzuarbeitende Fahrtroute 8 eine Querausdehnung aufweist, die geringer als die Arbeitsbreite A der landwirtschaftlichen Arbeitsmaschine 2 ist. Hier setzt nun die Erfindung an, mit welcher die Möglichkeit geschaffen wird, dass nunmehr zumindest ein Parameter 17, hier die Arbeitsbreite A, an die Gestalt des Restflächenterritoriums 14 oder analog an die Gestalt des bearbeiteten Territoriums 13 anpassbar ist. Aus Vereinfachungsgründen ist in Figur 1 die Gestalt des Restflächenterritoriums 14 so gewählt worden, dass die Breite des Restflächenterritoriums 14 annähernd zwei Einzelarbeitsbreiten EA der dem Trägerfahrzeug 4 zugeordneten Mäheinheiten 6 entspricht, sodass in noch näher zu beschreibender Weise unter Einbeziehung des Routenplanungssystems 7 dafür gesorgt werden kann, dass die Arbeitsaggregate 6 der landwirtschaftliche Arbeitsmaschine 2 nur über eine Teilarbeitsbreite TA aktiviert sind. Auf die in Figur 1 dargestellten Mäheinheiten 6 bezogen bedeutet dies, dass die landwirtschaftliche Arbeitsmaschine 2 einen niedrigeren Energiebedarf aufweist und zudem über eine verbesserte Manövrierfähigkeit verfügt, sofern die überzählige Mäheinheit 6a, wie dargestellt, von der Arbeits- in eine Nichtarbeitsposition verbracht wird.

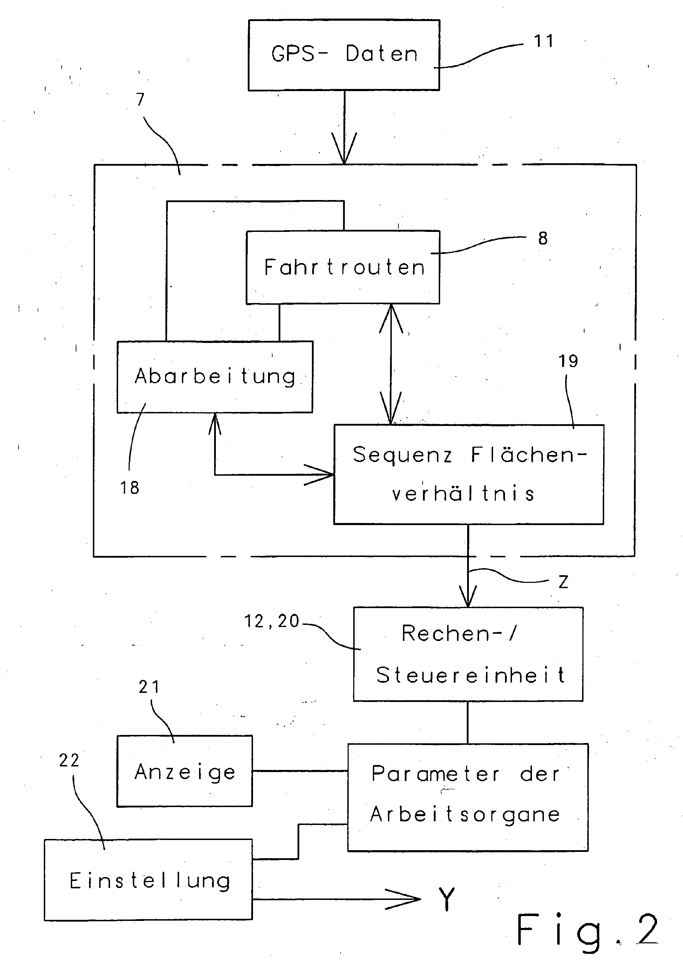

Figur 2 zeigt die wesentlichen Schritte des erfindungsgemäßen Verfahrens in schematischer Flussbilddarstellung. Wie bereits beschrieben, generiert das Routenplanungssystem 7 zunächst in an sich bekannter Weise und zumindest unter Einbeziehung von GPS-basierten Positionsdaten 11 eine Vielzahl von Fahrtrouten 8, deren Abarbeitung in einem Programmschritt 18 von dem Routenplanungssystem 7 registriert und abgespeichert wird. Zudem sind die generierten und hinterlegten Fahrtrouten 8 und deren Abarbeitungsstand über eine Sequenz "Flächenverhältnis" 19 miteinander verknüpft. Die Sequenz "Flächenverhältnis" 19 ermittelt aus den generierten Fahrtrouten 8 und dem Stand ihrer Abarbeitung 18 unter Einbeziehung der Arbeitsbreite A der landwirtschaftlichen Arbeitsmaschine 2 die Gestalt des bearbeiteten Territoriums 13 sowie die Gestalt des Restflächenterritoriums 14 und übergibt diese Informationen in Form von Ausgangssignalen Z an eine Rechen- und Steuereinheit 20, die im einfachsten Fall mit der ohnehin vorhandenen Verrechnungseinheit 12 des Routenplanungssystems 7 identisch sein kann. Die Rechen- und Steuereinheit 20 ermittelt schließlich aus diesen, die Gestalt des bearbeitenden Territoriums 13 und/oder des Restflächenterritoriums 14 kodierenden Ausgangssignalen Z für die landwirtschaftliche Erntemaschine 2 und/oder für die an die landwirtschaftliche Arbeitsmaschine 2 adaptierten Arbeitsaggregate 6 zu ändernde Parameter 17 deren Änderung eine Anpassung der Arbeitsweise der landwirtschaftlichen Arbeitsmaschine 2 und ihrer Arbeitsaggregate 6 an die jeweilige Gestalt des Restflächenterritoriums 14 oder des bereits bearbeiteten Territoriums 13 bewirkt. In der Regel wird hier die Gestalt des Restflächenterritoriums 14 ausschlaggebend sein. Wegen der unmittelbaren Abhängigkeit voneinander liegt es aber auch im Rahmen der Erfindung, die Änderung verschiedenster Parameter 17 an die Gestalt des bereits bearbeiteten Territoriums 13 zu koppeln. Die von der Rechen- und Steuereinheit 20 ermittelten Parameter 17 können in einem weiteren Verfahrensschritt 21 mittels der Anzeigeeinheit 16 dem Betreiber 15 angezeigt werden, sodass dieser deren Einstellung an den verschiedensten Organen der landwirtschaftlichen Arbeitsmaschine 2 oder an ihr adaptierten Arbeitsaggregaten 6 vornehmen kann. Es ist aber auch denkbar, dass in einem weiteren Verfahrensschritt 22 unmittelbar durch die Rechen- und Steuereinheit 20 Stellsignale Y zur selbsttätigen Einstellung der ermittelten Parameter 17 an der landwirtschaftlichen Arbeitsmaschine 2 oder den adaptierten Arbeitsaggregaten 6 generiert werden.

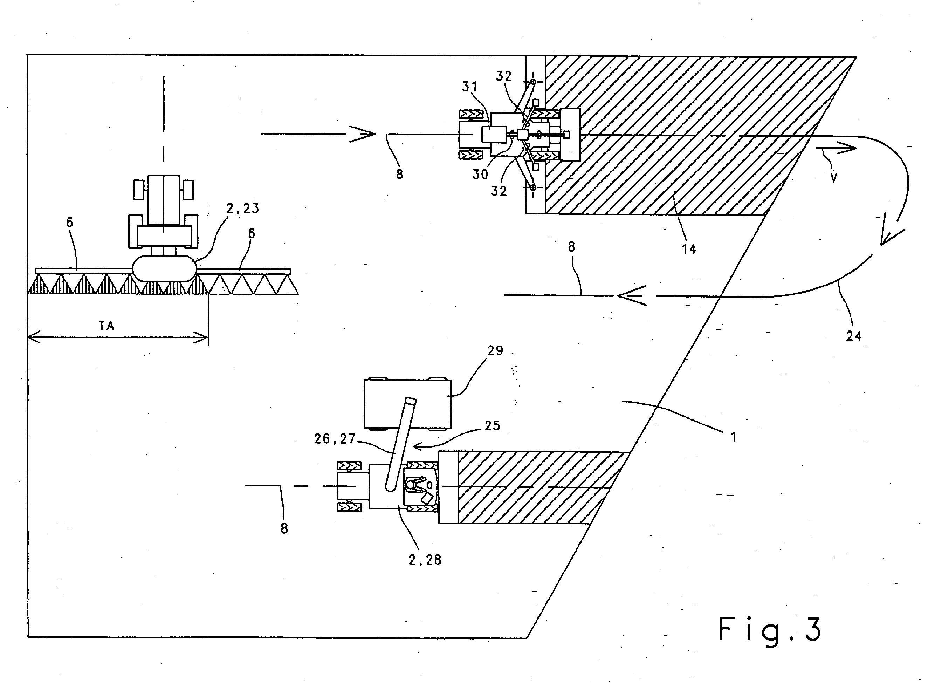

Gemäß Figur 3, links unten, kann die landwirtschaftliche Arbeitsmaschine 2 beispielsweise auch als stoffausbringende Arbeitsmaschine 23, wie etwa als Düngerstreuer, Herbizidspritze oder Sämaschine, ausgeführt sein, wobei das Betreiben in einer Teilarbeitsbreite TA entweder durch bloßes Abschalten der Arbeitsaggregate 6 oder Abschalten und Verschwenken der Arbeitsaggregate 6 in eine Nichtarbeitsposition erfolgen kann. Der in Abhängigkeit von der Gestalt des Restflächenterritoriums 14 änderbare Parameter 17 kann in vorteilhafter Weiterbildung der Erfindung auch die Fahrgeschwindigkeit v umfassen. Dies ist insbesondere dann von Vorteil, wenn die landwirtschaftliche Arbeitsmaschine 2 Hilfsfahrten zwischen aufeinanderfolgend abzuarbeitenden Fahrtrouten 8 durchführt oder nach vollständiger Bearbeitung eines zu bearbeitenden Territoriums 1 einen Wechsel zum nächsten Territorium vornimmt. In beiden Fällen wird die landwirtschaftliche Arbeitsmaschine 2 gewöhnlich mit höhere Fahrgeschwindigkeit v als beim sogenannten Arbeiten im Bestand betrieben. Weiter kann der änderbare Parameter 17 die Aktivierung vordefinierter und beispielsweise in der Rechen- und Steuereinheit 20 hinterlegter Arbeitsabläufe wie etwa ein sogenanntes "Vorgewendemanagement" 24 umfassen, Figur 3, mittlere Darstellung. Derartige "Vorgewendemanagements" 24 umfassen im einfachsten Fall das Ausheben der Arbeitsaggregate 6 am Ende der Abarbeitung einer Fahrtroute 8 und das Wiederabsenken der Arbeitsaggregate 6 beim Einfahren in die nächste abzuarbeitende Fahrtroute 8. Weiter kann der änderbare Parameter 17 das rechts- und linksseitige Aktivieren 25 von Arbeitsorganen 26, wie etwa das verschwenken des Auswurfschachtes 27 einer als Feldhäcksler 28 ausgeführten landwirtschaftlichen Arbeitsmaschine 2 umfassen. Dies hat insbesondere den Vorteil, dass die landwirtschaftliche Arbeitsmaschine 2 selbsttätig in Abhängigkeit von der Lage des Restflächenterritoriums 14 auf dem zu bearbeitenden Territorium 1 erkennt, wenn beispielsweise Abtankfahrzeuge 29 wegen eingeschränkter Platzverhältnisse nur auf einer ganz bestimmten Seite zur Fahrtroute 8 oder dem damit korrespondierenden Restflächenterritorium 14 angeordnet sein können.

In Abhängigkeit von der Arbeitsbreite A der landwirtschaftlichen Erntemaschine 2 nimmt deren Leistungsbedarf zu oder ab. Kennt nun das Routenplanungssystem 7 die Gestalt des Restflächenterritoriums 14 kann die Rechen- und Steuereinheit 20 zudem so ausgeführt sein, dass die generierten Stellsignale Y nach Figur 2 beispielsweise die Drehzahl 30 des Motors 31 der landwirtschaftlichen Arbeitsmaschine 2 oder die Drehzahlen 32 der verschiedensten Arbeitsaggregate 6 in erfindungsgemäßer Weise anpassen. Dies hat insbesondere den Vorteil, dass beispielsweise zur Kraftstoffeinsparung Drehzahlabsenkungen beim Arbeiten in Teilarbeitsbreiten TA vorgenommen werden können.

### Bezugszeichenliste:

- 1: Territorium
- 2: landwirtschaftliche Arbeitsmaschine
- 3: selbstfahrendes Mähwerk
- 4: Trägerfahrzeug
- 5: Schlepper
- 6: Arbeitsaggregat
- 7: Routenplanungssystem
- 8: Fahrtroute
- 9: Außenkontur
- 10: GPS-Empfänger
- 11: Positionssignal
- 12: Verrechnungseinheit
- 13: bearbeitetes Territorium
- 14: Restflächenterritorium
- 15: Betreiber
- 16: Anzeigeeinheit
- 17: änderbarer Parameter
- 18: Programmschritt
- 19: Sequenz "Flächenverhältnis"
- 20: Rechen- und Steuereinheit
- 21: Verfahrensschritt
- 22: Verfahrensschritt
- 23: stoffausbringende Arbeitsmaschine
- 24: Vorgewendemanagement
- 25: Rechts-/Linksaktivierung
- 26: Arbeitsorgane
- 27: Auswurfschacht
- 28: Feldhäcksler
- 29: Abtankfahrzeug
- 30: Motordrehzahl
- 31: Motor
- 32: Drehzahl der Antriebe

- A: Arbeitsbreite
- EA: Einzelarbeitsbreite
- TA: Teilarbeitsbreite
- Y: Stellsignal
- Z: Ausgangssignal
- v: Fahrgeschwindigkeit

## Patentansprüche

1. Verfahren zur Steuerung einer landwirtschaftlichen Arbeitsmaschine (2) oder einen landwirtschaftlichen Anbeitsmaschine die Zumindest von einem Trägerfahrzeug (4,5) und einem oder mehreren an das Trägerfahrzeug (4,5) adaptierten Arbeitsaggregaten (6) gebildet wird, wobei der landwirtschaftlichen Arbeitsmaschine (2) ein Routenptanungssystem zur Generierung von Fahrtrouten in einem Territorium zugeordnet ist und wobei das Routenplanungssystem das Territorium In zumindest ein bearbeltetes Territorium (13) und wenigstens ein Restflächenterritorium (14) unterteilt
**dadurch gekennzeichnet,**
**dass** zumindest ein Parameter (17) der landwirtschaftlichen Arbeitsmasch ine (2) in Abhängigkeit von der Gestalt eines bearbeiteten Territoriums (13) und/oder eines Restflächenterritoriums (14) angepasst wird und der zumindest eine Parameter (17) die Ausrichtung (18) der landwirtschaftlichen Arbeitsmaschine (2) und/oder des adaptierten Arbebaggregats (6) In der Weise umfasst, dass ein nicht benötigtes Arbeitsaggregat (6) von einer Arbeits- in eine Nichtarbeitsposition verbracht wird.

2. Verfahren zur Steuerung einer landwirtschaftlichen Arbeitsmaschine nach Anspruch 1,
**dadurch gekennzeichnet,**
**dass** die landwirtschaftliche Arbeitsmaschine (2) von zumindest einem Trägerfahrzeug (4, 5) und einem oder mehreren an das Trägerfahrzeug (4, 5) adaptierten Arbeitsaggregaten (6) gebildet wird.

3. Verfahren zur Steuerung einer landwirtschaftlichen Arbeitsmaschine nach Anspruch 2,
**dadurch gekennzeichnet,**
**dass** der die Ausrichtung (18) bestimmende Parameter (17) die Einstellung von Tellarbeitsbreiten (TA) umfasst.

4. Verfahren zur Steuerung einer landwirtschaftlichen Arbeitsmaschine nach Anspruch 3,
**dadurch gekennzeichnet,**
**dass** die Teilarbeitsbreite (TA) durch Zu- und Abschaltung von Arbeitsaggregaten (6) beeinflusst wird.

5. Verfahren zur Steuerung einer landwirtschaftlichen Arbeitsmaschine nach einem der vorhergehenden Ansprüche,
**dadurch gekennzeichnet,**
**dass** der Parameter (17) die Änderung der Fahrgeschwindigkeit (v) der landwirtschaftlichen Arbeitsmaschine (2) umfasst.

6. Verfahren zur Steuerung einer landwirtschaftlichen Arbeitsmaschine nach einem der vorhergehenden Ansprüche,
**dadurch gekennzeichnet,**
**dass** der Parameter (17) die Aktivierung vordefinierter Arbeitsabläufe umfasst.

7. Verfahren zur Steuerung einer landwirtschaftlichen Arbeitsmaschine nach Anspruch 6,
**dadurch gekennzeichnet,**
**dass** der vordefinierte Arbeitsablauf ein sogenanntes Vorgewendemanagement (24) ist.

8. Verfahren zur Steuerung einer landwirtschaftlichen Arbeitsmaschine nach einem der vorhergehenden Ansprüche,
**dadurch gekennzeichnet,**
**dass** der Parameter (17) das rechts- und linksseitige Aktivieren (25) von Arbeitsorganen (26, 27) umfasst.

9. Verfahren zur Steuerung einer landwirtschaftlichen Arbeitsmaschine nach einem der vorhergehenden Ansprüche,
**dadurch gekennzeichnet,**
**dass** der landwirtschaftilchen Arbeitsmaschine (2) zumindest ein Motor (30) und eine Vielzahl von Antrieben zugeordnet sind und der zumindest eine Parameter (17) die Anderung der Drehzahl (31) des Motors (30) und/oder die Änderung der Drehzahlen (32) der Antriebe umfasst.

10. Vorrichtung zur Steuerung einer landwirtschaflichen Arbeitsmaschine oder einen landwirtschaftlichen Arbeitsmaschine die zumindest von einem Trägerfahrzeug (4,5) und einem oder mehreren an das Trägerfahrzeug (4,5) adaptierten, Arbeitsaggregaten (6) gebildet wird wobei der landwirtschaftlichen Arbeitsmaschine ein Routenplanungssystem zur Generierung von Fahrtrouten in einem Territorium zugeordnet ist und wobei das Routenplanungssystem das Territorium in zumindest ein bearbeitetes Territorim (13) und wenigstens ein Restflächenterritorium (14) unterteilt
**dadurch gekennzeichnet,**
**dass** das Routenplanungssystem (7) mit zumindest einer Rechen- und Steueretnheit (12, 20) In Wirkverbindung steht und wobei die Rechen- und Steuereinheit (12, 20) in Abhängigkeit von den generierten Fahrtrouten (8) Stellsignale (y) zur Einstellung zumindest eines Parameters (17) der landwirtschaftlichen Arbeitsmaschine (2) generiert und wobei der zumindest eine Parameter (17) der landwirtschaftlichen Arbeitsmaschine (2) in Abhängigkeit von der Gestalt eines bearbeiteten Territoriums (13) und/oder eines Restflächenterritoriums (14) ermittelt wird und der zumindest eine Parameter (17) die Ausrichtung (18) der landwirtschaftlichen Arbeitsmaschine (2) und/oder des adaptierten Arbeitsaggregats (6) in der Weise umfasst, dass ein nicht benötigtes Arbeitseggregat (6) von einer Arbeits- in eine Nichtarbeitsposition verbracht wird.

11. Vorrichtung zur Steuerung einer landwirtschaftlichen Arbeitsmaschine nach Anspruch 10,
**dadurch gekennzeichnet,**
**dass** die Rechen- und Steuereinheit (12, 20) selbsttätig die Einstellung der ermittelten Parameter (17) vornimmt.

12. Vorrichtung zur Steuerung einer landwirtschaftlichen Arbeitsmaschine nach einem der Ansprüche 10-11,
**dadurch gekennzeichnet,**
**dass** die ermittelten Parameter (17) mittels Anzeigeneihheit (16) visualisiert werden.

## Claims

1. A method of controlling an agricultural working machine (2) or an agricultural working machine which is formed at least by a carrier vehicle (4, 5) and one or more working assemblies (6) adapted to the carrier vehicle (4, 5), wherein associated with the agricultural working machine (2) is a route planning system for generating travel routes in a territory and wherein the route planning system subdivides the territory into at least one worked territory (13) and at least one remaining area territory (14), **characterised in that**
at least one parameter (17) of the agricultural working machine (2) is adapted in dependence on the configuration of a worked territory (13) and/or a remaining area territory (14) and the at least one parameter (17) includes the orientation (18) of the agricultural working machine (2) and/or the adapted working assembly (6) in such a way that a working assembly (6) that is not required is moved from a working position into a non-working position.

2. A method of controlling an agricultural working machine according to claim 1 **characterised in that** the agricultural working machine (2) is formed by at least one carrier vehicle (4, 5) and one or more working assemblies (6) adapted to the carrier vehicle (4, 5).

3. A method of controlling an agricultural working machine according to claim 2 **characterised in that** the parameter (17) determining the orientation (18) includes adjustment of partial working widths (TA).

4. A method of controlling an agricultural working machine according to claim 3 **characterised in that** the partial working width (TA) is influenced by switching working assemblies (6) on and off.

5. A method of controlling an agricultural working machine according to one of the preceding claims **characterised in that** the parameter (17) includes changing the travel speed (V) of the agricultural working machine (2).

6. A method of controlling an agricultural working machine according to one of the preceding claims **characterised in that** the parameter (17) includes activation of predefined working procedures.

7. A method of controlling an agricultural working machine according to claim 6 **characterised in that** the predefined working procedure is a so-called headland management system (24).

8. A method of controlling an agricultural working machine according to one of the preceding claims **characterised in that** the parameter (17) includes activation (25) on the right side and the left side of working members (26, 27).

9. A method of controlling an agricultural working machine according to one of the preceding claims **characterised in that** at least one engine (30) and a plurality of drives are associated with the agricultural working machine (2) and the at least one parameter (17) includes changing the speed of rotation (31) of the engine (30) and/or changing the speeds of rotation (32) of the drives.

10. Apparatus for controlling an agricultural working machine (2) or an agricultural working machine which is formed at least by a carrier vehicle (4, 5) and one or more working assemblies (6) adapted to the carrier vehicle (4, 5), wherein associated with the agricultural working machine (2) is a route planning system for generating travel routes in a territory and wherein the route planning system subdivides the territory into at least one worked territory (13) and at least one remaining area territory (14), **characterised in that**
the route planning system (7) is operatively connected to at least one calculating and control unit (12, 20) and wherein the calculating and control unit (12, 20) in dependence on the generated travel routes (8) generates control signals (y) for adjusting at least one parameter (17) of the agricultural working machine (2) and wherein the at least one parameter (17) of the agricultural working machine (2) is ascertained in dependence on the configuration of a worked territory (13) and/or a remaining area territory (14) and the at least one parameter (17) includes the orientation (18) of the agricultural working machine (2) and/or the adapted working assembly (6) in such a way that a working assembly (6) that is not required is moved from a working position into a non-working position.

11. Apparatus for controlling an agricultural working machine according to claim 10 **characterised in that** the calculating and control unit (12, 20) automatically implements adjustment of the ascertained parameters (17).

12. Apparatus for controlling an agricultural working machine according to one of claims 10 and 11 **characterised in that** the ascertained parameters (17) are displayed by means of a display unit (16).

## Revendications

1. Procédé de commande d'un engin agricole (2) ou d'un engin agricole formé d'au moins un véhicule porteur (4, 5) et d'un ou plusieurs équipements de travail (6) adaptés au véhicule porteur (4, 5), un système de planification d'itinéraire étant associé à l'engin agricole (2) pour générer des itinéraires sur un territoire, et le système de planification d'itinéraire divisant le territoire en au moins un territoire traité (13) et en au moins un territoire de surface restante (14), **caractérisé en ce qu'**au moins un paramètre (17) de l'engin agricole (2) est adapté en fonction de la forme d'un territoire traité (13) et/ou d'un territoire de surface restante (14), et le au moins un paramètre (17) englobe l'orientation (18) de l'engin agricole (2) et/ou de l'équipement de travail adapté (6), de façon qu'un équipement de travail (6) dont on n'a pas besoin soit ramené d'une position de travail à une position de non-travail.

2. Procédé de commande d'un engin agricole selon la revendication 1, **caractérisé en ce que** l'engin agricole (2) est formé d'au moins un véhicule porteur (4, 5) et d'un ou plusieurs équipements de travail (6) adaptés au véhicule porteur (4, 5) .

3. Procédé de commande d'un engin agricole selon la revendication 2, **caractérisé en ce que** le paramètre (17) déterminant l'orientation (18) englobe le réglage de largeurs de travail partielles (TA).

4. Procédé de commande d'un engin agricole selon la revendication 3, **caractérisé en ce que** la largeur de travail partielle (TA) est influencée par la mise en et hors service d'équipements de travail (6) .

5. Procédé de commande d'un engin agricole selon une des revendications précédentes, **caractérisé en ce que** le paramètre (17) englobe la modification de la vitesse de marche (v) de l'engin agricole (2).

6. Procédé de commande d'un engin agricole selon une des revendications précédentes, **caractérisé en ce que** le paramètre (17) englobe l'activation de séquences de travail prédéfinies.

7. Procédé de commande d'un engin agricole selon la revendication 6, **caractérisé en ce que** la séquence de travail prédéfinie est une « gestion des zones de demi-tour » (24).

8. Procédé de commande d'un engin agricole selon une des revendications précédentes, **caractérisé en ce que** le paramètre (17) englobe l'activation côtés droit et gauche (25) d'organes de travail (26, 27) .

9. Procédé de commande d'un engin agricole selon une des revendications précédentes, **caractérisé en ce qu'**à l'engin agricole (2) sont associés au moins un moteur (30) et une pluralité de moyens d'entraînement, et le au moins un paramètre (17) englobe la modification de la vitesse de rotation (31) du moteur (30) et/ou la modification des vitesses de rotation (32) des moyens d'entraînement.

10. Procédé de commande d'un engin agricole (2) ou d'un engin agricole formé d'au moins un véhicule porteur (4, 5) et d'un ou plusieurs équipements de travail (6) adaptés au véhicule porteur (4, 5), un système de planification d'itinéraire étant associé à l'engin agricole (2) pour générer des itinéraires sur un territoire, et le système de planification d'itinéraire divisant le territoire en au moins un territoire traité (13) et en au moins un territoire de surface restante (14), **caractérisé en ce que** le système de planification d'itinéraire (7) est en liaison active avec une unité de calcul et de commande (12, 20), et l'unité de calcul et de commande (12, 20) génère, en fonction des itinéraires (8) générés, des signaux de réglage (y) pour régler au moins un paramètre (17) de l'engin agricole (2), et le au moins un paramètre (17) de l'engin agricole (2) étant déterminé en fonction de la forme du territoire traité (13) et/ou du territoire de surface restante (14), et le au moins un paramètre (17) englobant l'orientation (18) de l'engin agricole (2) et/ou de l'équipement de travail adapté (6), de façon qu'un équipement de travail (6) dont on n'a pas besoin soit ramené d'une position de travail à une position de non-travail.

11. Dispositif de commande d'un engin agricole selon la revendication 10, **caractérisé en ce que** l'unité de calcul et de commande (12, 20) procède automatiquement au réglage des paramètres (17) déterminés.

12. Dispositif de commande d'un engin agricole selon une des revendications 10-11, **caractérisé en ce que** les paramètres (17) déterminés sont visualisés au moyen d'une unité d'affichage (16).
